# EUROPÄISCHE PATENTSCHRIFT

(11) **EP 3 034 817 B1**
(45) Veröffentlichungstag und Bekanntmachung des Hinweises auf die Patenterteilung: **21.03.2018**
(21) Anmeldenummer: 15197327.8
(22) Anmeldetag: 01.12.2015
(51) Int. Cl.: F01D 25/20

(54) **ÖLKREISLAUF EINES FLUGTRIEBWERKS**
OIL CIRCUIT OF AN AIRCRAFT ENGINE
CIRCUIT D'HUILE D'UN MOTEUR D'AVION

(30) Priorität: 18.12.2014 DE 102014119074
(43) Veröffentlichungstag der Anmeldung: 22.06.2016
(73) Patentinhaber: Rolls-Royce Deutschland Ltd & Co KG, 15827 Blankenfelde-Mahlow (DE)
(72) Erfinder: Beier, Jürgen, 15732 Schulzendorf (DE); Blumrich, Markus, 10247 Berlin (DE)
(74) Vertreter: Schmidt, Martin Michael

(56) Entgegenhaltungen:
- DE-A1-102004 056 295
- GB-A- 2 130 308
- US-A- 4 012 012

## Beschreibung

Die Erfindung betrifft einen Ölkreislauf eines Flugtriebwerks mit einer Tankeinrichtung, einer Schmiermittelpumpeneinrichtung und wenigstens einer Rückförderpumpeneinrichtung gemäß der im Oberbegriff des Patentanspruches 1 näher definierten Art. Flüssigkeitsversorgungssysteme für Gasturbinentriebwerke sind aus der GB-2130308 bekannt. Bei bekannten Ölkreisläufen von Flugtriebwerken wird im Betrieb des Triebwerks zur Schmierung und Kühlung vorgesehenes Öl mittels einer Schmierölleitung von einem Tank über eine Pumpeneinrichtung Verbrauchern zur Schmierung und Kühlung zugeführt. Als Verbraucher sind hierbei insbesondere eine Hilfsgerätegetriebeeinrichtung und in Lagerkammern angeordnete Lagereinrichtungen vorgesehen. Aus dem jeweiligen Ölsumpf der Verbraucher und von einem Ölabscheider wird das Öl über Rückförderpumpen, sogenannte scavenge pumps, und eine gemeinsame Rückführleitung zurück in den Tank gefördert.

Um zu verhindern, dass nach einer Abschaltung des Triebwerks Öl von der Schmierleitung zurück in den Tank läuft, ist stromab der Pumpeneinrichtung ein Ventil angeordnet, das bei einer Triebwerksabschaltung die Schmierleitung schließt. Hierdurch strömt das sich stromab des Ventils in der Schmierleitung befindliche Öl über eine Leitung in ein Gehäuse der Hilfsgerätegetriebeeinrichtung. Das sich bei der Triebwerksabschaltung im Bereich der Lagerkammern befindliche Öl fließt über die Rückführleitung in den Tank ab. Bei einem Anlaufen des Triebwerks wird Öl von dem Tank zur Schmierung zu den Verbrauchern gefördert, wobei das im Bereich der Hilfsgerätegetriebeeinrichtung gespeicherte Öl zunächst dem Tank zugeführt wird. Die insgesamt hierfür erforderliche Ölmenge wird auch als engine gulp bezeichnet.

Der vorliegenden Erfindung liegt die Aufgabe zugrunde, einen Ölkreislauf eines Flugtriebwerks zur Verfügung zu stellen, der kostengünstig und gewichtsoptimiert ausgeführt ist.

Erfindungsgemäß wird diese Aufgabe mit einem Ölkreislauf mit den Merkmalen des Patentanspruches 1 gelöst.

Der erfindungsgemäße Ölkreislauf eines Flugtriebwerks ist mit einer Tankeinrichtung, einer Schmiermittelpumpeneinrichtung und wenigstens einer Rückförderpumpeneinrichtung ausgeführt, wobei mittels der Schmiermittelpumpeneinrichtung Öl über wenigstens eine Zuführleitung von der Tankeinrichtung wenigstens einem Verbraucher des Flugtriebwerks und einer Hilfsgerätegetriebeeinrichtung zuführbar ist und mittels wenigstens einer Rückförderpumpeneinrichtung über wenigstens eine Rückführleitung wieder der Tankeinrichtung zuführbar ist.

Erfindungsgemäß ist vorgesehen, dass die Rückführleitung über eine weitere Rückführleitung mit der Hilfsgerätegetriebeeinrichtung verbunden ist, wobei eine Ventileinrichtung vorgesehen ist, die zwischen wenigstens einem offenen Schaltzustand und einem geschlossenem Zustand verstellbar ist, wobei in offenem Schaltzustand der Ventileinrichtung Öl über die Rückführleitung der Tankeinrichtung zuführbar ist und in geschlossenem Zustand der Ventileinrichtung eine Ölführung über die Rückführleitung zu der Tankeinrichtung gesperrt ist und Öl von der Rückführleitung über die weitere Rückführleitung der Hilfsgerätegetriebeeinrichtung zuführbar ist.

Der erfindungsgemäße Ölkreislauf hat den Vorteil, dass die Ventileinrichtung derart schaltbar ist, dass Öl bei einer Triebwerksabschaltung nicht in die Tankeinrichtung zurückfließt, sondern der Hilfsgerätegetriebeeinrichtung zugeführt und in deren Bereich gespeichert wird. Hierdurch ist die Ölmenge, die bei einem Triebwerksstillstand von der Tankeinrichtung zu speichern ist, gegenüber einem herkömmlich ausgeführten Ölkreislauf, bei dem ein Teil des Öls des Ölkreislaufs nach einer Triebwerksabschaltung in die Tankeinrichtung abfließt, gering und die Tankeinrichtung kann vorteilhafterweise klein, leicht und kostengünstig ausgeführt werden. Bei dem erfindungsgemäßen Ölkreislauf ist nahezu eine gesamte zur Schmierung vorgesehene Ölmenge, ein so genannter engine gulp, bei einem Triebwerksstillstand im Bereich der Hilfsgerätegetriebeeinrichtung gespeichert, so dass die während eines Triebwerksstillstands im Bereich der Tankeinrichtung gelagerte Ölmenge gering ist. Die mit dem erfindungsgemäßen Ölkreislauf bei einem Triebwerksstillstand im Bereich der Hilfsgerätegetriebeeinrichtung gespeicherte Ölmenge ist somit gegenüber herkömmlichen Ölkreisläufen bei einem Triebwerksstillstand vergrößert. Da innerhalb eines Gehäuses der Hilfsgerätegetriebeeinrichtung allerdings ausreichend Platz für die zu speichernde Ölmenge vorhanden ist, sind bei dem erfindungsgemäßen Ölkreislauf bekannte Hilfsgerätegetriebeeinrichtungen ohne bauliche Anpassungen einsetzbar.

Bei einer vorteilhaften Ausführung eines erfindungsgemäßen Ölkreislaufs ist es vorgesehen, dass die Ventileinrichtung als insbesondere federbelastetes Rückschlagventil ausgeführt ist. Eine derartige Ventileinrichtung wird zwischen dem offenen Zustand und dem geschlossenen Zustand umgeschaltet, wenn ein durch die Rückförderpumpen im Bereich der Rückförderleitung vorliegender Druck einen beispielsweise über die Federkraft einstellbaren Grenzdruck, insbesondere bei einer Triebwerksabschaltung, unterschreitet. Es ist somit kein aufwändiger Steuermechanismus zur Schaltung der Ventileinrichtung zwischen dem offenen und dem geschlossenen Zustand vorzusehen.

Bei einer hierzu alternativen Ausführung des Ölkreislaufs ist die Ventileinrichtung als ansteuerbares Schaltventil ausgeführt. Hierdurch kann von einer Steuereinrichtung eine Schaltung der Ventileinrichtung zwischen dem einen Ölstrom durch die Ventileinrichtung ermöglichenden offenen Zustand und dem einen Ölstrom durch die Ventileinrichtung unterbindenden Zustand in gewünschtem Umfang flexibel vorgenommen werden.

Wenn stromab der Schmiermittelpumpeneinrichtung in der Zuführleitung eine weitere Ventileinrichtung angeordnet ist, stromab derer die Zuführleitung mittels einer zusätzlichen Rückführleitung mit der weiteren Rückführleitung verbunden ist bzw. in diese mündet, wobei in offenem Schaltzustand der weiteren Ventileinrichtung Öl über die Zuführleitung von der Tankeinrichtung den Verbrauchern zuführbar ist und in geschlossenem Zustand der weiteren Ventileinrichtung eine Ölführung von der Tankeinrichtung in Richtung der Verbraucher gesperrt ist, wird auch im Bereich der Zuführleitungen vorliegendes Öl bei einer Triebwerksabschaltung der Hilfsgerätegetriebeeinrichtung über die zusätzliche Rückführleitung und die weitere Rückführleitung zugeführt, so dass die Tankeinrichtung vorteilhafterweise nicht zur Aufnahme einer im Betrieb des Flugtriebwerks in diesem Bereich vorliegenden Ölmenge auszuführen ist. Die weitere Ventileinrichtung kann dabei in analoger Weise wie die Ventileinrichtung, beispielsweise als Rückschlagventil oder Schaltventil, ausgeführt sein.

Bei einer vorteilhaften Ausführung des erfindungsgemäßen Ölkreislaufs ist der weiteren Rückführleitung wenigstens eine erste Drosseleinrichtung zugeordnet, die vorzugsweise ausgehend von der wenigstens einen Rückförderpumpeneinrichtung stromauf eines Mündungsbereichs der zusätzlichen Rückführleitung in die weitere Rückführleitung angeordnet ist. Hierdurch wird bei entsprechender Ausführung der Drosseleinrichtung sichergestellt, dass in einem Betrieb des Flug- bzw. Strahltriebwerks Öl nicht in unerwünschtem Umfang über die weitere Rückführleitung in Richtung der Hilfsgerätegetriebeeinrichtung geführt wird, sondern das Öl über die Rückführleitung durch die Ventileinrichtung der Tankeinrichtung zugeführt wird.

Wenn eine zweite Drosseleinrichtung ausgehend von der wenigstens einen Rückförderpumpeneinrichtung stromab eines Mündungsbereichs der zusätzlichen Rückführleitung in die weitere Rückführleitung angeordnet ist, kann auf einfache Weise sichergestellt werden, dass in einem Betrieb des Triebwerks von der Tankeinrichtung in der Zuführleitung gefördertes Öl den Verbrauchern zugeführt wird und nicht über die zusätzliche Rückführleitung in Richtung der Hilfsgerätegetriebeeinrichtung abgeführt wird.

Um auf einfache und sichere Weise zu verhindern, dass bei einer Triebwerksabschaltung Öl über die zusätzliche Rückführleitung durch die erste Drosseleinrichtung in Richtung der Rückführleitung geleitet wird, sondern über die zweite Drosseleinrichtung in Richtung der Hilfsgerätegetriebeeinrichtung geleitet wird, kann die erste Drosseleinrichtung einen kleineren Durchströmdurchmesser als die zweite Drosseleinrichtung aufweisen.

Vorzugsweise sind mehrere Rückförderpumpeneinrichtungen vorgesehen, über die Öl von verschiedenen Verbrauchern der Rückförderleitung zuführbar ist.

Bei einer vorteilhaften Ausführung des erfindungsgemäßen Ölkreislaufs ist wenigstens ein Verbraucher in einer Lagerkammer angeordnet und/oder als Ölabscheider des Flugtriebwerks ausgeführt.

Die Schmiermittelpumpeneinrichtung und die wenigstens eine Rückförderpumpeneinrichtung sind bei einer vorteilhaften Ausführung des erfindungsgemäßen Ölkreislaufs von einer einzigen, insbesondere als Flügelzellenpumpe ausgebildeten Pumpeneinrichtung gebildet.

Sowohl die in den Patentansprüchen angegebenen Merkmale als auch die in dem nachfolgenden Ausführungsbeispiel des erfindungsgemäßen Ölkreislaufs angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Ölkreislaufs ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine stark schematisierte Längsschnittansicht eines Flugtriebwerks mit einer eine Pumpeneinrichtung aufweisenden Hilfsgerätegetriebeeinrichtung; und
- Fig. 2: einen vereinfacht dargestellten Ölkreislauf des Flugtriebwerks der Fig. 1.

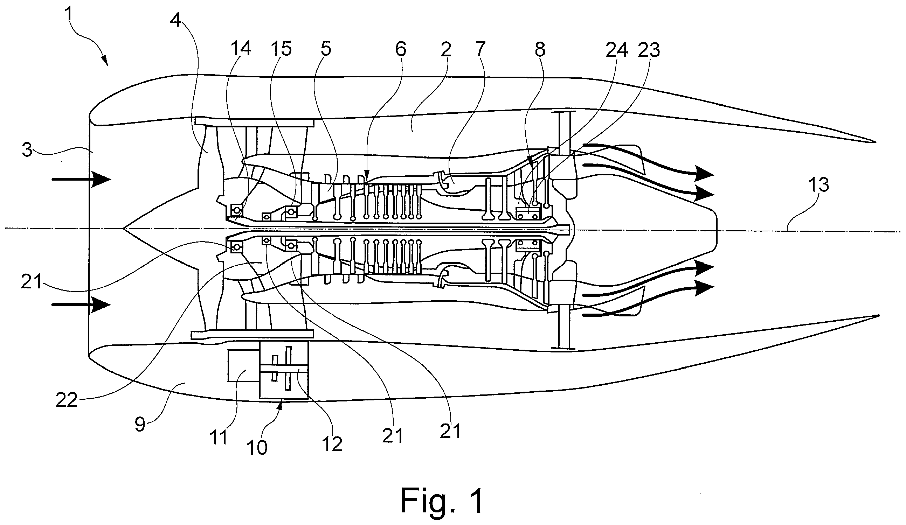

Fig. 1 zeigt ein Flugtriebwerk bzw. Strahltriebwerk 1 eines Flugzeugs in einer Längsschnittansicht. Das Flugtriebwerk 1 ist mit einem Nebenstromkanal 2 und einem Einlaufbereich 3 ausgebildet, wobei sich an den Einlaufbereich 3 stromab ein Bläser 4 in an sich bekannter Art und Weise anschließt. Wiederum stromab des Bläsers 4 teilt sich der Fluidstrom im Flugtriebwerk 1 in einen Nebenstrom und einen Kernstrom auf, wobei der Nebenstrom durch den Nebenstromkanal 2 und der Kernstrom in einen Triebwerkskern 5 strömt, der wiederum in an sich bekannter Art und Weise mit einer Verdichtereinrichtung 6, einem Brenner 7 und einer Turbineneinrichtung 8 ausgeführt ist.

In der gezeigten Ausführung ist im Bereich eines den Bläser 4 in radialer Richtung einfassenden Gehäuses 9 eine Hilfsgerätegetriebeeinrichtung 10 mit Hilfsgeräten angeordnet, von denen in Fig. 1 eine Pumpeneinrichtung 11 ersichtlich ist. Die Hilfsgeräte 11 sind jeweils von einer Hilfsgerätegetriebewelle 12 angetrieben, wobei die Hilfsgerätegetriebewellen 12 in Wirkverbindung mit einer um eine Zentralachse 13 des Flugtriebwerks 1 drehbar gelagerten Triebwerkswelle 14, 15 stehen.

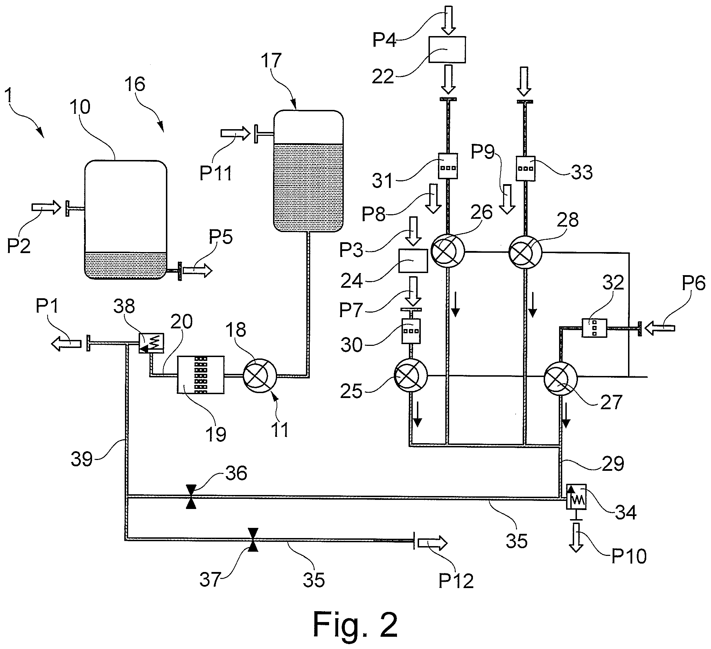

In Fig. 2 ist ein Ölkreislauf 16 des Flugtriebwerks 1 gezeigt, der eine Tankeinrichtung 17 aufweist, von der Öl über eine Schmiermittelpumpe 18 und eine Filtereinrichtung 19 entlang einer Zuführleitung 20 förderbar ist. Öl wird hierbei gemäß der Pfeile P1 bis P4 Verbrauchern, vorliegend der Hilfsgerätegetriebeeinrichtung 10 und Lagereinrichtungen 21, 23, zugeführt, wobei die Lagereinrichtungen 21 in einer vorderen Lagerkammer 22 und die Lagereinrichtung 23 in einer hinteren Lagerkammer 23 angeordnet sind. Aus einem Ölsumpf des jeweiligen Verbrauchers 10, 21, 23 bzw. der Lagerkammern 22, 24 wird Öl gemäß der Pfeile P7 bis P8 jeweils von einer Rückförderpumpeneinrichtung 25 und 26, sogenannten scavenge pumps, einer gemeinsamen Rückführleitung 29 zugeführt. Gemäß der Pfeile P5 und P6 wird aus einem Ölsumpf der Hilfsgerätegetriebeeinrichtung 10 über eine Rückförderpumpeneinrichtung 27 ebenfalls der gemeinsamen Rückführleitung 29 zugeführt.

Es ist eine weitere Rückförderpumpeneinrichtung 28 vorgesehen, über die Öl der gemeinsamen Rückführleitung 29 zuführbar ist, das im Bereich eines vorzugsweise der Hilfsgerätegetriebeeinrichtung 10 zugeordneten Ölabscheiders beispielsweise aus einem im Bereich der Lagerkammern 22, 24 vorliegenden Luft-ÖlVolumenstrom abgeschieden wird. Jeweils stromauf der jeweiligen Rückförderpumpeneinrichtungen 25 bis 28 ist vorliegend eine Filtereinrichtung 30, 31, 32 und 33 angeordnet. Ausgehend von der gemeinsamen Rückführleitung 29 wird Öl gemäß der Pfeile P10 und P11 durch die Rückförderpumpeneinrichtungen 25 bis 28 wieder der Tankeinrichtung 17 zugeführt.

Die Schmiermittelpumpe 18 und die Rückförderpumpeneinrichtung 28 sind vorliegend als gemeinsame Pumpeneinrichtung 10 ausgeführt, wobei die Pumpeneinrichtung 10 im vorliegenden Beispiel als Flügelzellenpumpe ausgeführt ist.

Im Bereich der gemeinsamen Rückführleitung 29 ist eine vorliegend als Rückschlagventil 34 ausgeführte Ventileinrichtung angeordnet. Im Betrieb des Flugtriebwerks 1 liegt in der gemeinsamen Rückführleitung 29 ein Betriebsdruck vor, der das Rückschlagventil 34 entgegen einer Federkraft einer Feder des Rückschlagventils 34 in einem offenen Zustand hält. Hierdurch kann das Öl über die gemeinsame Rückführleitung 29 durch das Rückschlagventil 34 gemäß der Pfeile P10 und P11 zu der Tankeinrichtung 17 geleitet werden. Unterschreitet der Druck in der gemeinsamen Rückführleitung 29 beispielsweise bei einer Abschaltung des Triebwerks 1 einen gewissen, von der Feder vorgegebenen Grenzdruck, schließt das Rückschlagventil 34 und Öl kann der Tankeinrichtung 17 nicht mehr gemäß der Pfeile P10 und P11 zugeführt werden.

Stromauf des Rückschlagventils 34 zweigt aus der gemeinsamen Rückführleitung 29 eine weitere Rückführleitung 35 ab, mittels der über eine erste Drosseleinrichtung 36 und eine zweite Drosseleinrichtung 37 Öl hier über Lagereinrichtungen und eine Rückführstufe der Hilfsgerätegetriebeeinrichtung 10 gemäß dem Pfeil P12 in ein Gehäuse der Hilfsgerätegetriebeeinrichtung 10 einführbar ist. Bei geschlossenem Zustand des Rückschlagventils 34 wird das aus den Lagerkammern 22, 24 abfließende Öl somit über die gemeinsame Rückführleitung 29 und die weitere Rückführleitung 35 der Hilfsgerätegetriebeeinrichtung 10 zugeführt und bei einem Triebwerksstillstand im Bereich der Hilfsgerätegetriebeeinrichtung 10 gespeichert.

Stromab der Filtereinrichtung 19 der Zuführleitung 20 ist ebenfalls eine als Rückschlagventil 38 ausgeführte weitere Ventileinrichtung angeordnet, stromab derer von der Zuführleitung 20 eine zusätzliche Rückführleitung 39 abzweigt. Die zusätzliche Rückführleitung 39 mündet zwischen der ersten Drosseleinrichtung 36 und der zweiten Drosseleinrichtung 37 in die weitere Rückführleitung 35. Das Rückschlagventil 38 wird im Betrieb des Flugtriebwerks 1 über einen von der Schmiermittelpumpe 18 erzeugten Druck in der Zuführleitung entgegen einer Kraft einer Feder des Rückschlagventils 38 in einem offenen Zustand gehalten, so dass Öl von der Tankeinrichtung 17 in Richtung der Verbraucher 10, 21, 23 gefördert wird. Die Drosseleinrichtungen 36, 37 weisen dabei einen derartigen Durchflussdurchmesser auf, dass das von der Schmiermittelpumpe 18 geförderte Öl im Betrieb des Flugtriebwerks 1 nicht durch die Drosseleinrichtungen 36, 37 strömt, sondern über die Zuführleitung 20 den Verbrauchern 10, 21, 23 zugeführt wird.

Wenn der Druck in der Zuführleitung 20 beispielsweise bei einer Abschaltung des Flugtriebwerks 1 unter einen von der Feder des Rückschlagventils 38 definierten Grenzdruck sinkt, kann sich in der Zuführleitung 20 stromab des Rückschlagventils 38 befindliches Öl nicht durch das Rückschlagventil 38 über die Zuführleitung 20 in Richtung der Tankeinrichtung 17 gefördert werden, sondern wird über die zusätzliche Rückführleitung 39 in Richtung der weiteren Rückführleitung 35 geleitet. Dadurch, dass ein Strömungsdurchmesser der ersten Drosseleinrichtung 36 kleiner als ein Strömungsdurchmesser der zweiten Drosseleinrichtung 37 ist, fließt das sich im Bereich der Zuführleitung 20 stromab des Rückschlagventils 38 befindliche Öl durch die zweite Drosseleinrichtung 37 in Richtung des Pfeils 12 zu der Hilfsgerätegetriebeeinrichtung 10 ab.

Die Ventileinrichtungen 34, 38 werden auch als sogenannte Static Anti Leak Valves bezeichnet.

Bei einem Anlaufen des Flugtriebwerks 1 wird das im Bereich der Hilfsgerätegetriebeeinrichtung 10 gespeicherte Öl gemäß den Pfeilen P5, P6 und P10 über die gemeinsame Rückführleitung 29 der Tankeinrichtung 17 zugeführt, von der aus wiederum die Verbraucher 10, 21, 23 und alle weiteren gewünschten Elemente des Flugtriebwerks 1 mit Öl versorgt werden.

Im Gegensatz zu bekannten Ölkreisläufen, bei denen bei einer Abschaltung des Triebwerks Öl zumindest teilweise aus dem Ölkreislauf in eine Tankeinrichtung abfließt, ist die Tankeinrichtung 17 kleiner, leichter und kostengünstiger ausführbar, da ein größerer Teil des abfließenden Öls im Bereich der Hilfsgerätegetriebeeinrichtung 10 gespeichert wird und hierfür im Bereich der Tankeinrichtung 17 kein Speicherplatz vorgesehen werden muss.

### Bezugszeichenliste

- 1: Flugtriebwerk
- 2: Nebenstromkanal
- 3: Einlaufbereich
- 4: Bläser
- 5: Triebwerkskern
- 6: Verdichtereinrichtung
- 7: Brenner
- 8: Turbineneinrichtung
- 9: Gehäuse
- 10: Hilfsgerätegetriebeeinrichtung
- 11: Pumpeneinrichtung
- 12: Hilfsgerätegetriebewelle
- 13: Zentralachse
- 14: Triebwerkswelle
- 15: Triebwerkswelle
- 16: Ölkreislauf
- 17: Tankeinrichtung
- 18: Schmiermittelpumpe
- 19: Filtereinrichtung
- 20: Zuführleitung
- 21: Lagereinrichtung
- 22: vordere Lagerkammer
- 23: Lagereinrichtung
- 24: hintere Lagerkammer
- 25 bis 28: Rückförderpumpeneinrichtung
- 29: gemeinsame Rückführleitung
- 30 bis 33: Filtereinrichtung
- 34: Ventileinrichtung; Rückschlagventil
- 35: weitere Rückführleitung
- 36: erste Drosseleinrichtung
- 37: zweite Drosseleinrichtung
- 38: weitere Ventileinrichtung; Rückschlagventil
- 39: zusätzliche Rückführleitung
- P1 bis P12: Pfeil

## Patentansprüche

1. Ölkreislauf (16) eines Flugtriebwerks (1) mit einer Tankeinrichtung (17), einer Schmiermittelpumpeneinrichtung (18) und wenigstens einer Rückförderpumpeneinrichtung (25, 26, 27, 28), wobei mittels der Schmiermittelpumpeneinrichtung (18) Öl über wenigstens eine Zuführleitung (20) von der Tankeinrichtung (17) wenigstens einem Verbraucher (21, 23) des Flugtriebwerks (1) und einer Hilfsgerätegetriebeeinrichtung (10) zuführbar ist und mittels wenigstens einer Rückförderpumpeneinrichtung (25, 26, 27, 28) über wenigstens eine Rückführleitung (29) wieder der Tankeinrichtung (17) zuführbar ist, **dadurch gekennzeichnet, dass** die Rückführleitung (29) über eine weitere Rückführleitung (35) mit der Hilfsgerätegetriebeeinrichtung (10) verbunden ist, wobei eine Ventileinrichtung (34) vorgesehen ist, die zwischen wenigstens einem offenen Schaltzustand und einem geschlossenem Zustand verstellbar ist, wobei in offenem Schaltzustand der Ventileinrichtung (34) Öl über die Rückführleitung (29) der Tankeinrichtung (17) zuführbar ist und in geschlossenem Zustand der Ventileinrichtung (34) eine Ölführung über die Rückführleitung (29) zu der Tankeinrichtung (17) gesperrt ist und Öl von der Rückführleitung (29) über die weitere Rückführleitung (35) der Hilfsgerätegetriebeeinrichtung (10) zuführbar ist.

2. Ölkreislauf nach Anspruch 1, **dadurch gekennzeichnet, dass** die Ventileinrichtung (34) als Rückschlagventil ausgeführt ist.

3. Ölkreislauf nach Anspruch 1, **dadurch gekennzeichnet, dass** die Ventileinrichtung als Schaltventil ausgeführt ist.

4. Ölkreislauf nach einem der Ansprüche 1 bis 3, **dadurch gekennzeichnet, dass** stromab der Schmiermittelpumpeneinrichtung (18) in der Zuführleitung (20) eine weitere Ventileinrichtung (38) angeordnet ist, stromab derer die Zuführleitung (20) mittels einer zusätzlichen Rückführleitung (39) mit der weiteren Rückführleitung (35) verbunden ist, wobei in offenem Schaltzustand der weiteren Ventileinrichtung (38) Öl über die Zuführleitung (20) den Verbrauchern (10, 21, 23) zuführbar ist und in geschlossenem Zustand der weiteren Ventileinrichtung (38) eine Ölführung von der Tankeinrichtung (17) in Richtung der Verbraucher (10, 21, 23) gesperrt ist.

5. Ölkreislauf nach einem der Ansprüche 1 bis 4, **dadurch gekennzeichnet, dass** der weiteren Rückführleitung (35) wenigstens eine erste Drosseleinrichtung (36) zugeordnet ist.

6. Ölkreislauf nach Anspruch 5, **dadurch gekennzeichnet, dass** eine zweite Drosseleinrichtung (37) ausgehend von der wenigstens einen Rückförderpumpeneinrichtung (25, 26, 27, 28) stromab eines Mündungsbereichs der zusätzlichen Rückführleitung (39) in die weitere Rückführleitung (35) angeordnet ist.

7. Ölkreislauf nach Anspruch 6, **dadurch gekennzeichnet, dass** die erste Drosseleinrichtung (36) einen kleineren Durchströmdurchmesser als die zweite Drosseleinrichtung (37) aufweist.

8. Ölkreislauf nach einem der Ansprüche 1 bis 7, **dadurch gekennzeichnet, dass** mehrere Rückförderpumpeneinrichtungen (25, 26, 27, 28) vorgesehen sind, über die Öl von den Verbrauchern (10, 21, 23) der Rückförderleitung (29) zuführbar ist.

9. Ölkreislauf nach einem der Ansprüche 1 bis 8, **dadurch gekennzeichnet, dass** wenigstens ein Verbraucher (21, 23) in einer Lagerkammer (22, 24) des Flugtriebwerks (1) angeordnet ist.

10. Ölkreislauf nach einem der Ansprüche 1 bis 9, **dadurch gekennzeichnet, dass** wenigstens ein Verbraucher des Flugtriebwerks als Ölabscheider ausgeführt ist.

11. Ölkreislauf nach einem der Ansprüche 1 bis 10, **dadurch gekennzeichnet, dass** die Schmiermittelpumpeneinrichtung (18) und die wenigstens eine Rückförderpumpeneinrichtung (25, 26, 27, 28) von einer einzigen, insbesondere als Flügelzellenpumpe (11) ausgebildeten, Pumpeneinrichtung gebildet sind.

## Claims

1. Oil circuit (16) of an aircraft engine (1), including a tank device (17), a lubricant pumping device (18) and at least one recirculation pump device (25, 26, 27, 28), wherein oil can be supplied via at least one supply line (20) from the tank device (17) to at least one consumer (21, 23) of the aircraft engine (1) and to an accessory gearbox (10) by means of the lubricant pumping device (18), and can be resupplied to the tank device (17) via at least one return line (29) by means of at least one recirculation pump device (25, 26, 27, 28), **characterized in that** the return line (29) is connected to the accessory gearbox (10) via a further return line (35), wherein a valve device (34) is provided that can be switched between at least one open switching state and a closed state, wherein in the open switching state of the valve device (34) oil can be supplied to the tank device (17) via the return line (29), and in the closed state of the valve device (34) an oil feed to the tank device (17) via the return line (29) is blocked, and oil from the return line (29) can be supplied to the accessory gearbox (10) via the further return line (35).

2. Oil circuit in accordance with Claim 1, **characterized in that** the valve device (34) is designed as a check valve.

3. Oil circuit in accordance with Claim 1, **characterized in that** the valve device is designed as a switch valve.

4. Oil circuit in accordance with one of the Claims 1 to 3, **characterized in that** a further valve device (38) is arranged in the supply line (20) downstream of the lubricant pumping device (18), with the supply line (20) being connected to the further return line (35) downstream of the further valve device (38) by means of the additional return line (39), wherein in the open switching state of the further valve device (38) oil can be supplied to the consumers (10, 21, 23) via the supply line (20), and in the closed state of the further valve device (38) an oil feed from the tank device (17) in the direction of the consumers (10, 21, 23) is blocked.

5. Oil circuit in accordance with one of the Claims 1 to 4, **characterized in that** at least one first throttle device (36) is associated with the further return line (35).

6. Oil circuit in accordance with Claim 5, **characterized in that** a second throttle device (37) is arranged starting at the at least one recirculation pump device (25, 26, 27, 28) downstream of an outlet area of the additional return line (39) into the further return line (35).

7. Oil circuit in accordance with Claim 6, **characterized in that** the first throttle device (36) has a smaller through-flow diameter than the second throttle device (37).

8. Oil circuit in accordance with one of the Claims 1 to 7, **characterized in that** multiple recirculation pump devices (25, 26, 27, 28) are provided via which oil can be supplied to the return line (29) from the consumers (10, 21,23).

9. Oil circuit in accordance with one of the Claims 1 to 8, **characterized in that** at least one consumer (21, 23) is arranged inside a bearing chamber (22, 24) of the aircraft engine (1).

10. Oil circuit in accordance with one of the Claims 1 to 9, **characterized in that** at least one consumer of the aircraft engine is designed as an oil separator.

11. Oil circuit in accordance with one of the Claims 1 to 10, **characterized in that** the lubricant pumping device (18) and the at least one recirculation pump device (25, 26, 27, 28) are formed by a single pumping device, in particular by one that is designed as a vane pump (11).

## Revendications

1. Circuit d'huile (16) d'un moteur d'avion (1) avec un agencement de réservoir (17), un dispositif de pompage de lubrifiant (18) et au moins un dispositif à pompe de refoulement (25, 26, 27, 28), sachant qu'au moyen du dispositif de pompage de lubrifiant (18), de l'huile peut être amenée, par le biais d'au moins une conduite d'alimentation (20), de l'agencement de réservoir (17) vers au moins un consommateur (21, 23) du moteur d'avion (1) et vers une boîte d'accessoires (10) et peut être ramenée à l'agencement de réservoir (17) au moyen d'au moins un dispositif à pompe de refoulement (25, 26, 27, 28) par le biais d'au moins une conduite de retour (29), **caractérisé en ce que** la conduite de retour (29) est reliée à la boîte d'accessoires (10) par le biais d'une autre conduite de retour (35), sachant qu'est prévu un dispositif de soupape (34) qui peut être réglé entre au moins un état de commutation ouvert et un état fermé, sachant qu'à l'état de commutation ouvert du dispositif de soupape (34), de l'huile peut être amenée à l'agencement de réservoir (17) par le biais de la conduite de retour (29) et qu'à l'état fermé du dispositif de soupape (34), une alimentation en huile de l'agencement de réservoir (17) par le biais de la conduite de retour (29) est bloquée et que l'huile provenant de la conduite de retour (29) peut être amenée à la boîte d'accessoires (10) par le biais de l'autre conduite de retour (35).

2. Circuit d'huile selon la revendication n° 1, **caractérisé en ce que** le dispositif de soupape (34) est conçu sous forme de clapet antiretour.

3. Circuit d'huile selon la revendication n° 1, **caractérisé en ce que** le dispositif de soupape est conçu sous forme de soupape de commutation.

4. Circuit d'huile selon une des revendications n° 1 à n° 3, **caractérisé en ce qu'**en aval du dispositif de pompage de lubrifiant (18), un autre dispositif de soupape (38) est disposé dans la conduite d'alimentation (20), en aval duquel dispositif de soupape (38) la conduite d'alimentation (20) est reliée à l'autre conduite de retour (35) au moyen d'une conduite de retour supplémentaire (39), sachant qu'à l'état de commutation ouvert de l'autre dispositif de soupape (38), de l'huile peut être amenée aux consommateurs (10, 21, 23) par le biais de la conduite d'alimentation (20) et qu'à l'état fermé de l'autre dispositif de soupape (38), un acheminement de l'huile provenant de l'agencement de réservoir (17) vers les consommateurs (10, 21, 23) est bloqué.

5. Circuit d'huile selon une des revendications n° 1 à n° 4, **caractérisé en ce qu'**au moins un premier dispositif d'étranglement (36) est associé à l'autre conduite de retour (35).

6. Circuit d'huile selon la revendication n° 5, **caractérisé en ce qu'**un second dispositif d'étranglement (37) est disposé partant dudit au moins un dispositif à pompe de refoulement (25, 26, 27, 28) en aval d'une zone d'embouchure de la conduite de retour supplémentaire (39) dans l'autre conduite de retour (35).

7. Circuit d'huile selon la revendication n° 6, **caractérisé en ce que** le premier dispositif d'étranglement (36) présente un plus petit diamètre d'écoulement que le second dispositif d'étranglement (37).

8. Circuit d'huile selon une des revendications n° 1 à n° 7, **caractérisé en ce que** sont prévus plusieurs dispositifs à pompe de refoulement (25, 26, 27, 28) par le biais desquels de l'huile provenant des consommateurs (10, 21, 23) peut être amenée à la conduite de retour (29).

9. Circuit d'huile selon une des revendications n° 1 à n° 8, **caractérisé en ce qu'**au moins un consommateur (21, 23) est disposé dans une chambre de palier (22, 24) du moteur d'avion (1).

10. Circuit d'huile selon une des revendications n° 1 à n° 9, **caractérisé en ce qu'**au moins un consommateur du moteur d'avion est conçu sous forme de séparateur d'huile.

11. Circuit d'huile selon une des revendications n° 1 à n° 10, **caractérisé en ce que** le dispositif de pompage de lubrifiant (18) et ledit au moins un dispositif à pompe de refoulement (25, 26, 27, 23) sont formés par un seul dispositif de pompage conçu notamment sous forme de pompe à ailettes (11).
